# EUROPEAN PATENT SPECIFICATION

(11) **EP 0 459 272 B1**
(45) Date of publication and mention of the grant of the patent: **26.01.1994**
(21) Application number: 91108186.7
(22) Date of filing: 21.05.1991
(51) Int. Cl.: B65G 43/08, B65G 43/10

(54) **Synchronizing device for timely feeding solid articles to a cyclically operated pocket conveyor or to an other component of a machine**
Synchronisierungsvorrichtung zum periodischen Zuführen von festen Gegenständen an einen zyklisch betätigten Taschenförderer oder an einen anderen Teil einer Maschine
Dispositif de synchronisation pour l'alimentation d'articles rigides de façon périodique vers un transporteur à poches à fonctionnement cyclique ou vers une autre partie d'une machine

(30) Priority: 30.05.1990 IT 1246790
(43) Date of publication of application: 04.12.1991
(73) Proprietor: I.M.A. INDUSTRIA MACCHINE AUTOMATICHE S.p.A., I-40064 Ozzano dell'Emilia (IT)
(72) Inventor: Cane, Aristide, I-40068 San Lazzaro di Savena (IT); Ribani, Angiolino, I-40064 Ozzano dell'Emilia (IT)
(74) Representative: Porsia, Bruno

(56) References cited:
- EP-A- 0 305 755
- FR-A- 2 299 813
- GB-A- 2 129 754
- GB-A- 2 218 679
- US-A- 4 640 408

## Description

The invention relates to a synchronising device for timely feeding solid articles to a cyclically operated pocket conveyor or to an other component of a machine, as known from e.g. EP-A- 0 305 755.

The device of the invention may be, for example, used for timely feeding product-filled tubes to the pocket conveyor of a packaging machine, which will automatically introduce the said tubes into a respective case.

The object of the invention is to provide such a device, which differs from the known devices owing to its greater versatility of use and its very simple construction, and because it can be operated at a very high speed.

According to the invention, this object is attained by the provision of the features contained in claim 1.

Some preferred embodiments are the subject of the dependent claims.

The device according to the invention differs from the known devices owing to its higher versatility of use and its very simple construction, and because it can be operated at a very high speed.

The features of the device according to the invention and the advantages arising therefrom will become clearly apparent in the following description of one preferred embodiment thereof, which is shown merely by way of a non-limiting example in the Figures of the annexed single sheet of drawings, in which:
Figure 1 is a diagrammatic side elevational view of the device;
Figure 2 is a sectional view taken on line II-II in Figure 1, showing some constructional details of the device.
Figure 3 shows a possible diagram of the activation speed of the synchronizer according to the invention.

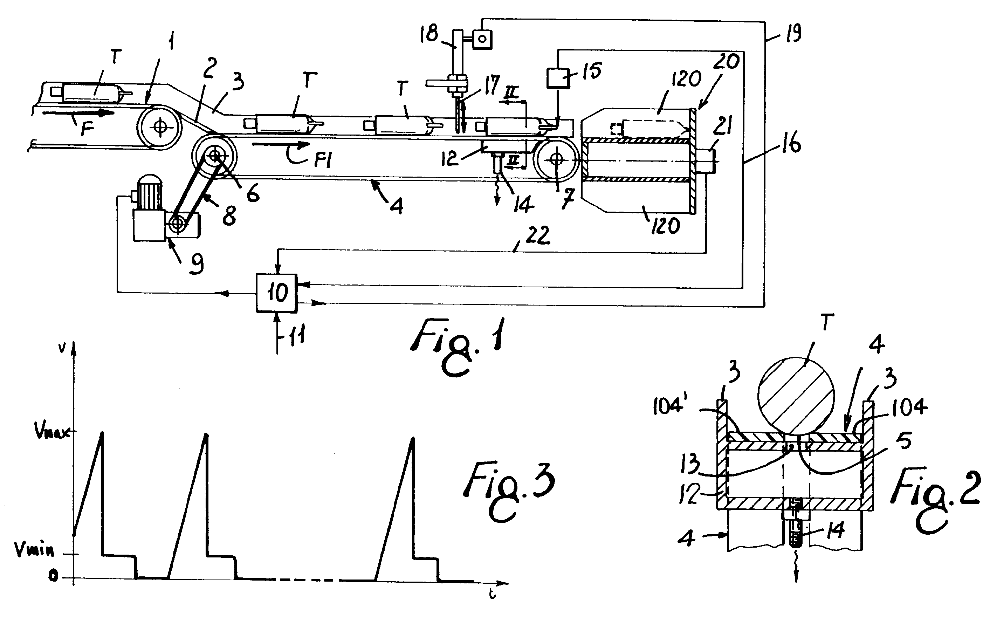

In Figure 1, reference numeral 1 denotes the conveyor for feeding the articles T, e.g. the tubes, arranged in one single file and properly oriented, for example, with their bottoms first, which are advanced continuously in the direction of arrow F.

After having been moved past an optional chute 2, while being always guided by the sidewalls 3, the articles T are caused to reach the initial section of a normally horizontal conveyor 4 that, for example, is formed by a pair of parallel belts 104-104' which are so spaced apart that a longitudinal opening 5 of a width being smaller than that of the articles T arranged in this opening (Figure 2), is left therebetween.

It is to be understood that the conveyor 4 may be formed, as an alternative, by a single belt or ribbon with intermediate slots or holes in place of said opening 5 (see below).

Reference numerals 6 and 7 denote the end shafts of conveyor 4 that is suitably longer than the length of an articles T. Through one of said shafts and a belt drive 8, the said conveyor is connected to a geared motor 9 controlled by an electronic unit 10 comprising an inverter or any other suitable device for actuating the conveyor 4 at a speed that can be varied from zero to a pre-determined maximum speed value Vmax (Figure 3), and according to the logic indicated hereinafter.

Reference numeral 11 denotes the terminal for feeding electricity to the unit 10.

The upper flight of conveyor 4 is caused to co-operate by its end section with a suction box 12 formed with at least one opening 13 communicating with the opening 5 between the belts of said conveyor and being connected through a duct 14 to a suction source of suitable power.

The length of the suction box 12 preferably is equal or substantially equal to, or is slightly longer or slightly shorter than, the length of an article T.

When an article T is over the suction box or distributor 12, it is under the sucking action exerted by this component, and is firmly held against the conveyor 4. When an article has reached the end section of conveyor 4, its leading end is detected by a sensor 15, such as, for example, a photo-cell, which is connected to the unit 10 via a terminal 16.

In order to obtain a reliable operation of the device of the invention, a shutter 17 is provided upstream of sensor 15 and is spaced therefrom by a distance slightly greater than the length of an article T, the said shutter being controlled by an actuator 18, for example of pneumatic type, which is connected to the unit 10 via a terminal 19. When the shutter 17 is in its lowered down position as shown in Figure 1, the shutter 17 interrupts the flow of articles T on conveyor 4, while when this shutter is in the uplifted position, it does not interfere with the articles, so that the articles can be freely advanced.

Immediately downstream of conveyor 4, a pocket conveyor 20 is arranged at right angle with conveyor 4, with its pockets 120 being caused to slide coplanarly to the upper flight of conveyor 4, the said conveyor 20 being either intermittently or continuously operated, and being connected to a timing signals generator 21, which is connected to the unit 10 via the terminal 22. A signal is generated from generator 21 each time a pocket 120 comes to be positioned in-line with the conveyor 4, or is about to run in front of the said conveyor.

At the beginning of its operative cycle, the device is in the condition of Figure 1. The conveyor 4 is at standstill, with an article T on the suction box 12 which continuously is in operative condition. The shutter 17 is in its lowered down position.

When the generator 21 emits a timing signal, the unit 10 causes the conveyor 4 to be operated at the predetermined maximum speed value Vmax (Figure 3), so that it feeds the leading article T into a pocket 120 in conveyor 20. The belts of conveyor 4 are caused to slide on the articles T that were previously at standstill on the said conveyor and that are not affected by suction, so that only the leading article which is held on the conveyor 4 by the suction from the suction box 12, is positively subjected to the acceleration of the synchronizing conveyor. During this step, the shutter 17 is kept in its lowered down position, to prevent the articles upstream of the suction box from being advanced.

When an article has been fed into a pocket 120, the shutter 17 is lifted up, and while the conveyor 20 is moving a new pocket into alignment with the conveyor 4, the speed of this latter conveyor is quickly reduced to a predetermined minimum speed value Vmin (Figure 3) which is sufficient for causing the articles T thereon to be advanced in the direction of arrow F1. When an article T has reached the suction box or distributor 12 and is detected by the sensor 15, the conveyor 4 is stopped and the shutter 17 is lowered. When another timing signal is emitted from the generator 21, the said cycle is repeated. If upon activation of the generator 21, the sensor 15 will detect no article on the conveyor 4, this conveyor is kept moving at the minimum speed until an article has arrived in front of sensor 15, and then it is stopped and kept waiting for the command from the generator 21.

It is to be understood that the shutter 17 may be constructed otherwise than illustrated, for example so as to comprise a rocking lever, to avoid that this shutter may undesirably interfere with an article during the article-stopping and/or article-releasing step.

Of course, if the articles T are delivered in a suitably spaced apart relation onto the conveyor 4, and if they are smooth and if they have a considerable suitable weight, the shutter 17 may be eliminated.

The conveyor 1 may be differently arranged and oriented with respect to the conveyor 4. The conveyor 4 may not be rectilinear, and may be replaced by a carrousel means or any other equivalent means.

In order that the device be adjusted as required for the articles to be handled, means may be provided for adjusting the orientation and the distance of the conveyor 4, or at least of the end section thereof, relative to the conveyor 20 which is to be fed timely.

The suction box or distributor 12 may be of a different length (either longer or shorter) than that shown in Figure 1, depending upon the properties of the articles to be fed.

The conveyor 20 may be of the rectilinear or carrousel type, or it may be replaced by equivalent means.

If the conveyor 20 is continuously operated at a high speed, a plurality of side-by-side arranged devices of the above-specified type may be used, whereby the time interval between a feeding step and the successive step will be increased.

Differently from what has been described above, the device of the invention can be used for feeding groups of articles into the pockets 120. In this instance, the device will be operated either with its cycle being repeated, or with a conveyor 4 being caused to run at the maximum speed until it has fed the desired number of articles, whereafter the said conveyor is slowed down and is then stopped and reset for the successive feeding step. In this instance, the dual function of limit sensor and counting sensor may be performed by the sensor 15.

## Claims

1. A synchronizing device for timely feeding solid articles (T) to a cyclically operated pocket conveyor (20), or to an other component of a machine, comprising:
a) a synchronizing belt conveyor with a horizontal upper flight (104), having a length which is much longer in the direction of travel, than that of a single article (T) to be fed,
b) means (1) for feeding a plurality of articles (T) in a single file on to the upper flight of the said synchronizing belt conveyor (4),
c) a suction box (12) arranged at the end section of the synchronizing belt conveyor (4), below its upper flight (104), for applying a suction through this upper flight so as to have the articles (T) retained thereon, the suction box (12) extending over a length of the synchronizing conveyor (4), which is equal to, or is slightly different from the length in the direction of travel, of a single article (T),
d) a driving unit (8,9) for actuating the said synchronizing belt conveyor (4),
e) an electronic unit (10) for controlling the said driving unit (8,9) so as to cause the driving speed to assume alternately a zero value, a predetermined maximum value (Vmax) and a predetermined minimum value (Vmin),
f) the synchronizing belt conveyor (4) extends to a pocket conveyor (20) into which it introduces the articles (T),
g) at least one sensor (15) which is arranged at the end of the synchronizing belt conveyor (4) and is connected to the electronic unit (10) for stopping the driving unit (8,9) of this conveyor (4) when this sensor detects an article (T) on the end section of the upper flight (104) of the synchronizing belt conveyor (4),
h) a timing signals generator (21) which is actuated by the pocket conveyor (20) and is connected to the electronic unit (10), which when receiving a timing signal from the said generator (21), actuates the synchronizing belt conveyor (4) at the predetermined maximum speed value (Vmax), to introduce the first leading article (T) from the sucking end section of the upper flight of the synchronizing belt conveyor (4) into the pocket conveyor (20), while the articles (T) arranged on the synchronizing belt conveyor away from the suction box (12) remain at standstill or substantially at standstill due to inertial sliding with respect to the underlying belt conveyor (4),
i) after the first leading article (T) having been transferred from the synchronizing belt conveyor (4) to the pocket conveyor (20), the speed of the synchronizing belt conveyor (4) is quickly decreased to the predetermined minimum value (Vmin), at which the remaining articles (T) arranged on the belt conveyor (4) are entrained thereby until the second leading article has reached the suction box (12) and has actuated the limit sensor (15), which causes the synchronizing belt conveyor (4) to be stopped.

2. The device according to claim 1, characterized in that a shutter (17) is arranged on the synchronizing belt conveyor (4), upstream of the region affected by the suction-box (12), which shutter is activated to interrupt the flow of articles (T) concurrently with the step by which the said conveyor is operated at the maximum speed value (Vmax), or for the major part of this step, and is deactivated when the said belt conveyor (4) is slowed down, and is re-activated when the said conveyor (14) is stopped, all this for the purpose of ensuring a reliable operation of the device of the invention.

3. The device according to claims 1 and 2, comprising means for adjusting the orientation and position of the end section of the synchronizing belt conveyor (4) with respect to the pocket conveyor (20) to be fed, so as to have this device adapted to the requirements arising from the type of articles to be handled, and/or from the type of either intermittent or continuous operation of the said pocket conveyor (20).

4. The device according to claims 1 to 3, characterized in that this device can be used to cyclically feed a predetermined quantity of articles (T) into each pocket (120) in the pocket conveyor (20), means being provided for causing the synchronizing belt conveyor (4) to repeat the said cycle a predetermined number of times, or for causing this conveyor to be kept operating at the maximum speed value (Vmax) until the predetermined quantity of articles (T) has been fed, whereafter the said belt conveyor (4) is slowed down and is stopped, and it is then reset for the successive feeding step.

## Patentansprüche

1. Synchronisierungsvorrichtung zum zeitrichtigen Fördern von festen Gegenständen (T) zu einem zylklisch betätigten Taschenförderer (20) oder zu einem anderen Teil einer Maschine mit
a. einem synchronisierenden Gurtförderer mit einem horizontalen oberen Trum (104), dessen Länge in Förderrichtung viel größer ist als diejenige eines einzelnen der zu fördernden Gegenstände (T),
b. Mitteln (1) zum Fördern mehrerer Artikel (T) in einer einzigen Reihe auf dem oberen Trum des synchronisierenden Gurtförderers (4),
c. einem Saugkasten (12), der am Endabschitt des synchronisierenden Gurtförderers (4) unter dessen oberen Trum (104) angeordnet ist, um eine Saugkraft durch das obere Trum hindurch anzulegen, so daß die Gegenstände (T) dort bleiben, wobei sich der Saugkasten (12) über eine Länge des synchronisierenden Förderers (4) erstreckt, die gleich oder geringfügig unterschiedlich ist zu der Länge eines einzelnen Gegenstandes (T) in Förderrichtung,
d. mit einer Antriebseinheit (8,9) zum Betätigen des synchronisierenden Gurtförderers (4),
e. mit einer elektronischen Einheit (10) zum Steuern der Antriebseinheit (8,9), so daß die Antriebsgeschwindigkeit alternierend den Wert Null annimmt, einen vorbestimmten Höchstwert (Vmax) und einen vorbestimmten Mindestwert (Vmin),
f. wobei der synchronisierende Gurtförderer (4) sich zu einem Taschenförderer (20) erstreckt, in den er die Gegenstände (T) einführt,
g. ferner mit wenigstens einem Sensor (15), der am Ende des synchronisierenden Gurtförderers (4) angeordnet ist und der an die elektronische Einheit (10) angeschlossen ist, um die Antriebseinheit (8,9) und diesen Förderer (4) anzuhalten, wenn der Sensor einen Gegenstand (T) auf dem Endabschnitt des oberen Trums (104) des synchronisierenden Gurtförderers (4) entdeckt, mit
h. einem Generator (21) für Zeitsignale, der vom Taschenförderer (20) betätigt wird und der an die elektronische Einheit (10) angeschlossen ist, und der bei dem Empfang eines Zeitsignals vom Generator (21) den synchronisierenden Gurtförderer (4) mit der vorbestimmten Höchstgeschwindigkeit (Vmax) betätigt, um den ersten, vorderen Gegenstand (T) vom saugenden Endabschnitt des oberen Trums des synchronisierenden Gurtförderers (4) in den Taschenförderer (20) einzuführen, während die auf dem synchronisierenden Gurtförderer hinweg vom Saugkasten (12) angeordneten Gegenstände (T) stillstehen oder doch zumindest stillstehen wegen eines durch die Trägheit verursachten Gleitens auf dem darunter befindlichen Gurtförderer (4), und wobei
i. die Geschwindigkeit des synchronisierenden Gurtförderers (4) schnell auf den vorbestimmten Mindestwert (Vmin) abfällt, nachdem der erste, vorderer Gegenstand (T) vom synchronisierenden Gurtförderer (4) an den Taschenförderer (20) übergeben wurde, bei welcher vorbestimmten Mindestgeschwindigkeit die verbleibenden Gegenstände (T) auf dem Gurtförderer verbleiben, bis der zweite, vordere Gegenstand den Saugkasten (12) erreicht hat und den Grenzsensor (15) betätigt hat, der bewirkt, daß der synchronisierende Gurtförderer (4) anhält.

2. Vorrichtung nach Anspruch 1,
**dadurch gekennzeichnet**,
daß ein Verschluß (17) auf dem synchronisierenden Gurtförderer (4) angeordnet ist, und zwar stromauf desjenigen Gebiets, das vom Saugkasten (12) beeinflußt wird, wobei der Verschluß betätigt wird, um den Strom der Gegenstände (T) gleichzeitig mit dem Verfahrensschritt anzuhalten, durch den der Förderer mit der Höchstgeschwindigkeit (Vmax) betätigt wird oder für den größeren Teil dieses Verfahrensschrittes, und dabein entaktiviert wird, wenn der Gurtförderer (4) verlangsamt wird und wiederaktiviert wird, wenn der Gurtförderer gestoppt wird, wobe all dieses erfolgt, um einen zuverlässigen Betrieb der erfindungsgemäßen Vorrichtung sicherzustellen.

3. Vorrichtung nach Anspruch 1 oder 2,
**dadurch gekennzeichnet**,
daß Mittel vorgesehen sind, um die Ausrichtung und Position des Endabschnitts des synchronisierenden Gurtförderers (4) in Bezug auf den zu beliefernden Taschenförderer (20) zu justieren, so daß die Vorrichtung denjenigen Anforderungen angepaßt wird, die vom Typ der zu handhabenden Gegenstände herrühren und/oder vom Typ der entweder intermittierernden oder kontunuierlichen Betätigung des Taschenförderers (20).

4. Vorrichtung nach den Ansprüchen 1 bis 3,
**dadurch gekennzeichnet**,
daß die Vorrichtung verwendet werden kann, um eine vorbestimmte Menge von Gegenständen (T) in jede Tasche (120) im Taschenförderer (20) zyklisch zu fördern, wobei Mittel vorgesehen sind, damit der synchronisierende Gurtförderer (4) diesen Zyklus vorbestimmte Male wiederholt, oder um zu bewirken, daß der Förderer mit der Höchstgeschwindigkeit (Vmax) weiterhin arbeitet, bis die vorbestimmte Menge der Gegenstände (T) gefördert worden ist, wonach der Gurtförderer verlangsamt und angehalten wird und anschließend für den darauf folgenden Förderungsschritt zurückgestellt wird.

## Revendications

1. Un dispositif de synchronisation pour fournir aux instants appropriés des articles solides (T) à un convoyeur à poches (20) actionné de façon cyclique, ou à un autre organe d'une machine, comprenant :
a) un convoyeur à courroie ayant une fonction de synchronisation, qui comporte un brin supérieur horizontal (104), ayant une longueur qui est très supérieure dans la direction du déplacement à celle d'un seul article (T) à fournir,
b) des moyens (1) pour fournir un ensemble d'articles (T), en une seule file, au brin supérieur du convoyeur à courroie ayant une fonction de synchronisation (4),
c) une boîte à aspiration (12) disposée dans la partie finale du convoyeur à courroie ayant une fonction de synchronisation (4), au-dessous de son brin supérieur (104), pour appliquer une aspiration à travers son brin supérieur, de façon que les articles (T) soient retenus sur ce dernier, la boîte à aspiration (12) s'étendant sur une longueur du convoyeur ayant une fonction de synchronisation (4), qui est égale à la longueur d'un seul article (T) dans la direction du déplacement, ou qui est légèrement différente de cette longueur,
d) une unité d'entraînement (8, 9) pour actionner le convoyeur à courroie ayant une fonction de synchronisation (4),
e) une unité électronique (10) pour commander l'unité d'entraînement (8, 9) pour faire en sorte que la vitesse d'entraînement prenne alternativement une valeur égale à zéro, une valeur maximale prédéterminée (Vmax) et une valeur minimale prédéterminée (Vmin),
f) le convoyeur à courroie ayant une fonction de synchronisation (4) s'étendant vers un convoyeur à poches (20) dans lequel il introduit les articles (T),
g) au moins un capteur (15) qui est disposé à la fin du convoyeur à courroie ayant une fonction de synchronisation (4) et qui est connecté à l'unité électronique (10) pour arrêter l'unité d'entraînement (8, 9) de ce convoyeur (4) lorsque ce capteur détecte un article (T) sur la partie finale du brin supérieur (104) du convoyeur à courroie ayant une fonction de synchronisation (4),
h) un générateur de signaux de temps (21) qui est actionné par le convoyeur à poches (20) et est connecté à l'unité électronique (10) qui lorsqu'elle reçoit un signal de temps provenant de ce générateur (21), actionne le convoyeur à courroie ayant une fonction de synchronisation (4), avec la valeur de vitesse maximale prédéterminée (Vmax), pour introduire dans le convoyeur à poches (20) le premier article de tête (T) de la partie finale d'aspiration du brin supérieur du convoyeur à courroie ayant une fonction de synchronisation (4), tandis que les articles (T) qui sont disposés sur le convoyeur à courroie ayant une fonction de synchronisation en se trouvant à distance de la boîte d'aspiration (12), restent immobiles ou pratiquement immobiles, à cause du glissement inertiel par rapport au convoyeur à courroie (4) sousjacent,
i) après que le premier article de tête (T) a été transféré du convoyeur à courroie ayant une fonction de synchronisation (4) vers le convoyeur à poches (20), la vitesse du convoyeur à courroie ayant une fonction de synchronisation (4) est rapidement diminuée jusqu'à la valeur minimale prédéterminée (Vmin), à laquelle les articles restants (T) qui sont disposés sur le convoyeur à courroie (4) sont entraînés par ce dernier, jusqu'à ce que le second article en partant de l'article de tête ait atteint la boîte d'aspiration (12) et ait actionné le capteur de fin de course (15), ce qui provoque l'arrêt du convoyeur à courroie ayant une fonction de synchronisation (4).

2. Le dispositif selon la revendication 1, caractérisé en ce qu'un élément d'arrêt (17) est disposé sur le convoyeur à courroie ayant une fonction de synchronisation (4), en amont de la région affectée par la boîte d'aspiration (12), cet élément d'arrêt étant activé de façon à interrompre la circulation d'articles (T) simultanément à l'étape dans laquelle le convoyeur est actionné à la valeur de vitesse maximale (Vmax), ou pendant la majeure partie de cette étape, et étant désactivé lorsque le convoyeur à courroie (4) est ralenti, et réactivé lorsque le convoyeur (4) est arrêté, tout ceci ayant pour but d'assurer un fonctionnement fiable du dispositif de l'invention.

3. Le dispositif selon les revendications 1 et 2, comprenant des moyens pour régler l'orientation et la position de la partie finale du convoyeur à courroie ayant une fonction de synchronisation (4) par rapport au convoyeur à poches (20) auquel les articles doivent être fournis, de façon que ce dispositif soit adapté aux exigences qui découlent du type d'articles à manipuler, et/ou du type de fonctionnement intermittent ou continu du convoyeur à poches (20).

4. Le dispositif selon les revendications 1 à 3, caractérisé en ce que l'on peut utiliser ce dispositif pour fournir de façon cyclique à chaque poche (120) du convoyeur à poches (20) une quantité prédéterminée d'articles (T), des moyens étant incorporés pour faire en sorte que le convoyeur à courroie ayant une fonction de synchronisation (4) répète le cycle précité un nombre de fois prédéterminé, ou pour faire en sorte que le convoyeur continue à fonctionner à la valeur de vitesse maximale (Vmax) jusqu'à ce que la quantité prédéterminée d'articles (T) ait été fournie, après quoi le convoyeur à courroie (4) est ralenti et est arrêté, et il est ensuite réactivé pour l'étape de fourniture d'articles suivante.
